# FASCICULE DE BREVET EUROPEEN

(11) **EP 1 637 390 B1**
(45) Date de publication et mention de la délivrance du brevet: **21.11.2007**
(21) Numéro de dépôt: 05291846.3
(22) Date de dépôt: 07.09.2005
(51) Int. Cl.: B60N 2/30, B60R 21/02, B60J 5/10, B62D 47/00

(54) **Véhicule modulaire et procédé correspondant**
Modulares Fahrzeug und zugehöriges Verfahren
Modular vehicle and corresponding method

(30) Priorité: 20.09.2004 FR 0409935; 20.09.2004 FR 0409933
(43) Date de publication de la demande: 22.03.2006
(73) Titulaire: Heuliez, 79142 Cerizay Cedex (FR)
(72) Inventeur: Guillez, Jean-Marc, 79140 Cirieres (FR); Queveau, Paul, 79140 Montravers (FR); Queveau, Gérard, 79140 Le Pin (FR)
(74) Mandataire: Pichat, Thierry

(56) Documents cités:
- DE-A1- 19 811 886
- FR-A- 2 724 138
- FR-A- 2 725 669
- FR-A- 2 759 052
- US-A1- 2002 043 811

## Description

Sous un aspect notable est ici concernée la gestion de l'espace relatif disponible, dans un véhicule, en particulier une automobile, entre l'habitacle et un espace arrière de rangement situé derrière cet habitacle.

Sous un aspect, il s'agit de rendre modulaire un véhicule comprenant les caractéristiques du préambule de la revendication 1.

Une telle structure de véhicule est connue de FR-A- 2 725 669 et de DE-A-198 11 886.
Dans certains cas, on demeure malgré tout confronté à des problèmes difficilement conciliables de place, ce qui à amener à refuser certaines solutions sur certains types de véhicules et à les accepter sur d'autres.
Un aspect inventif vise ici en particulier à concilier de telles exigences et à favoriser une gestion intéressante de l'espace, sur un véhicule convertible.

Selon l'invention, on propose un véhicule selon la revendication 1 et un procédé pour rendre modulaire un véhicule selon la revendication 11.
C'est une solution hybride qui est donc proposée ici avec l'utilisation de l'assise coulissante présentée avant sur un véhicule découvrable, convertible, comprenant un toit mobile pouvant recouvrir ou dégager l'habitacle, qu'il s'agisse d'une solution avec capot de coffre arrière, couvre-tonneau (« tonneau cover ») ou autre.

En résumé, il sera a priori possible de moduler :
- la profondeur de l'espace arrière de rangement par rapport à 1' l'habitacle,
- et/ou l'utilisation du véhicule entre différentes versions, en particulier pick up,
- et/ou d'obtenir un véhicule couvert ou découvert : hard top, capote souple, toit rigide en plusieurs parties articulées entre elles et/ou par rapport au bâti structurel du véhicule.

D'autres caractéristiques et avantages apparaîtront encore de la description détaillée qui suit faite en référence aux dessins annexés dans lesquels :
- la figure 1 est une vue schématique en coupe longitudinale (axe X) d'un véhicule,
- la figure 2 est une vue en perspective partielle du véhicule de la figure 1 et la figure 3 en est une variante,
- la figure 4 est une vue de dessus, partielle, de la figure 1,
- la figure 7 correspond à la coupe VII-VII de la figure 4 et la figure 6 à la coupe VI-VI de la figure 5,
- les figures 8 à 12 montrent des étapes opératoires,
- la figure 13 correspond à la coupe XIII-XIII de la figure 7 et la figure 14 à la coupe XIV-XIV de cette même figure 13.

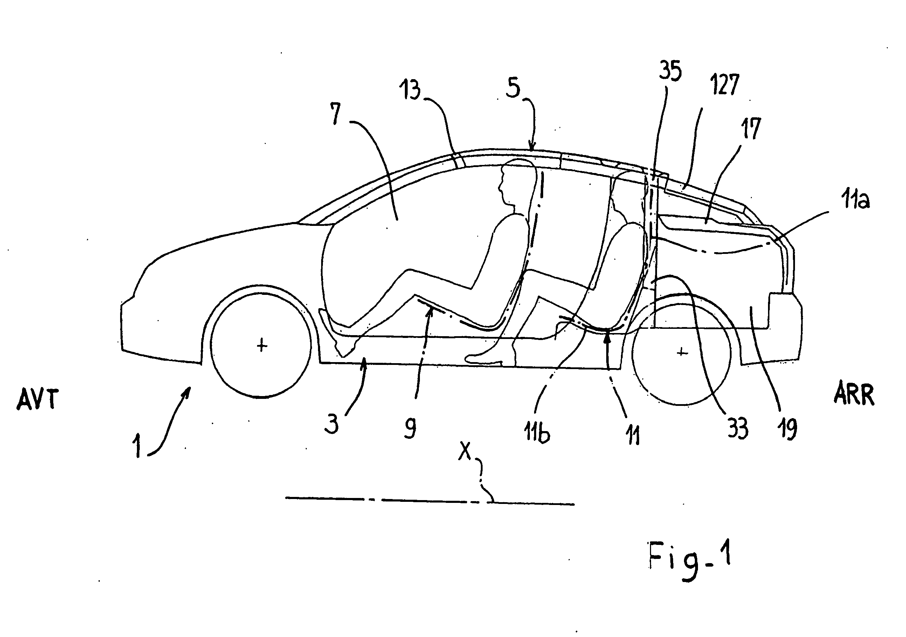

Figure 1, on voit un véhicule 1 comprenant un bâti structurel 3 définissant, en partie haute, un toit 5 qui, avec une zone environnante du bâti structurel 3 (lequel comprend le châssis, les portières, longerons, traverses, ...), définit l'habitacle intérieur 7.

Cet habitacle 7 accueille au moins quatre places assises réparties par exemple par paires en deux rangées de sièges, respectivement avant 9 et arrière 11.

L'habitacle 7 est donc recouvert par le toit 5, qui est ici un toit fixe intégré à la structure 3 et qui s'étend longitudinalement (suivant l'axe longitudinal X du véhicule) entre la traverse supérieure 13 du pare-brise et, à l'arrière, une vitre (ou lunette) arrière 15, c'est-à-dire sensiblement jusqu'au capot mobile 17 du coffre arrière 19.

On notera dès à présent que la vitre 15, qui est dressée globalement transversalement à l'axe longitudinal X, peut être indépendante du toit 5 (voir ci-après).

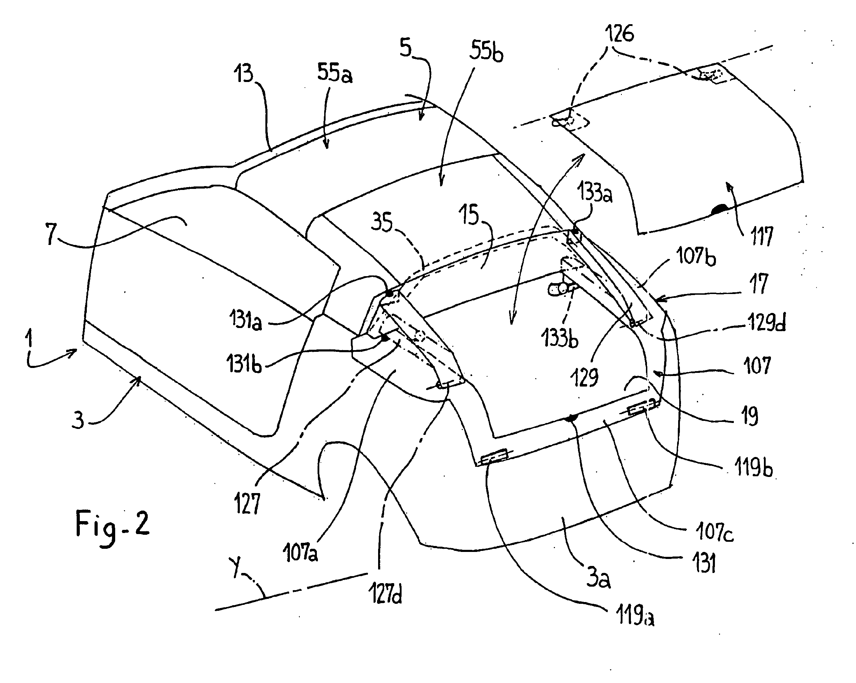

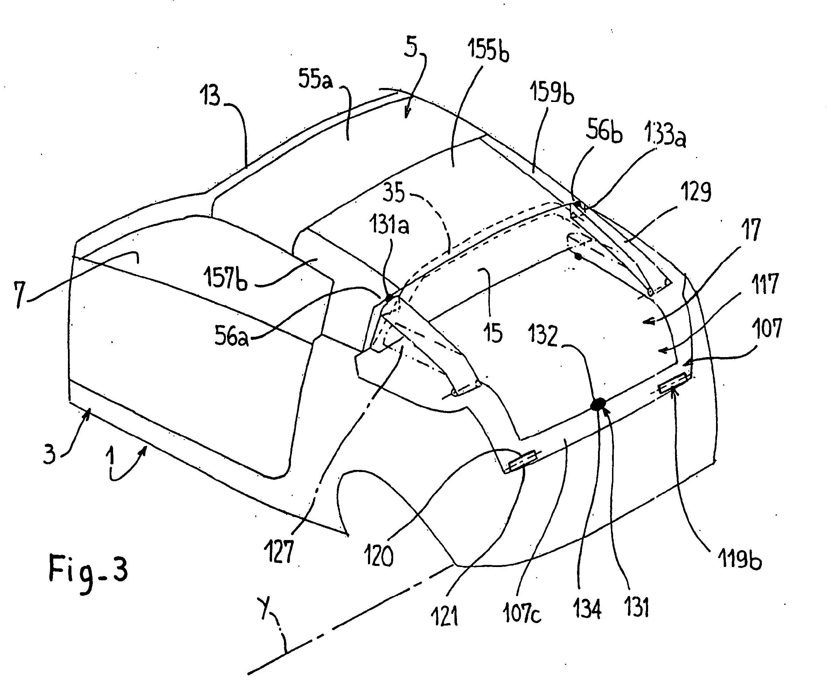

Cette limite arrière définit également, et sensiblement, l'avant d'un ensemble de capot mobile 17 adapté pour recouvrir ou libérer l'accès à une zone de rangement arrière 19 qui pourra être considérée, en particulier, soit comme une plate-forme de pick-up (figure 2) soit comme un coffre arrière (figure 3).

L'ensemble de capots 17 comprend un capot principal 107 et un capot auxiliaire 117, plus petit en longueur et largeur.

Les deux capots sont mobiles, le capot auxiliaire 117 par rapport au capot principal 107 et ce dernier par rapport au bâti structurel 3, de manière à pouvoir les ouvrir, ou les fermer, l'un sans l'autre et même pouvoir retirer le capot auxiliaire 117, dans la configuration pick-up de la figure 2.

Pour cela, et comme on le détaille mieux figure 3, où les ronds schématisent des moyens de verrouillage et les rectangles des pivots, on trouve, avec une symétrie par rapport à l'axe X :
- des pivots transversaux arrière 119a, 119b comprenant chacun des premiers éléments de pivotement 120 et des seconds éléments complémentaires de pivotement 121 liés respectivement au capot principal 107 et au bâti structurel 3, en partie transversale 3a basse de caisse, juste au-dessus du bouclier arrière, pour le pivotement du capot 107 par rapport au bâti 3;
- des pivots transversaux avant 123a, 123b comprenant chacun des premiers éléments de pivotement 124 et des seconds éléments complémentaires de pivotement 126 liés respectivement au capot principal 107 et au capot auxiliaire 117 pour le pivotement (y compris si on le souhaite jusqu'au retrait par dégondage) du capot auxiliaire 117 par rapport au capot principal;
- des verrous latéraux avant 127a, 127b pour le verrouillage libérable du capot principal par rapport au bâti structurel, lorsque le premier est rabattu par dessus, contre le second. Ces verrous comprennent chacun des premiers éléments mobiles de verrouillage (tels qu'un pêne) 128, montés mobiles sur par exemple le capot principal et des seconds éléments complémentaires fixes de verrouillage 130 (tels qu'une gâche) fixés alors au bâti structurel 3;
- et un verrou arrière 131 pour le verrouillage libérable du capot auxiliaire 117 par rapport au capot principal 107, lorsque le premier est rabattu par dessus, contre le second. Ce verrou, ici central, comprend des premiers éléments mobiles de verrouillage 132, par exemple mobile sur le capot auxiliaire et des seconds éléments complémentaires de verrouillage 134 fixés alors au capot principal.

On comprendra les termes « avant » et « arrière » en référence aux extrémités avant (AVT) et arrière (ARR) du véhicule et on notera que les axes de pivotement des pivots précités sont ici parallèles à l'axe Y du véhicule et donc perpendiculaires à son axe longitudinal X.

Ainsi, le capot principal 107 s'ouvre (ici uniquement) en basculant vers l'arrière du véhicule et le capot auxiliaire vers l'avant, bien entendu ceci dans l'état déverrouillé (libéré) des éléments de verrouillage précités.

Quant aux moyens de charnières dégondables définis par lesdits éléments de pivotement 124,126 des pivots transversaux avant 123a, 123b, ils autorisent donc le pivotement jusqu'à dégondage, c'est-à-dire jusqu'à séparation à cet endroit entre le capot auxiliaire 117 et le capot principal 107.

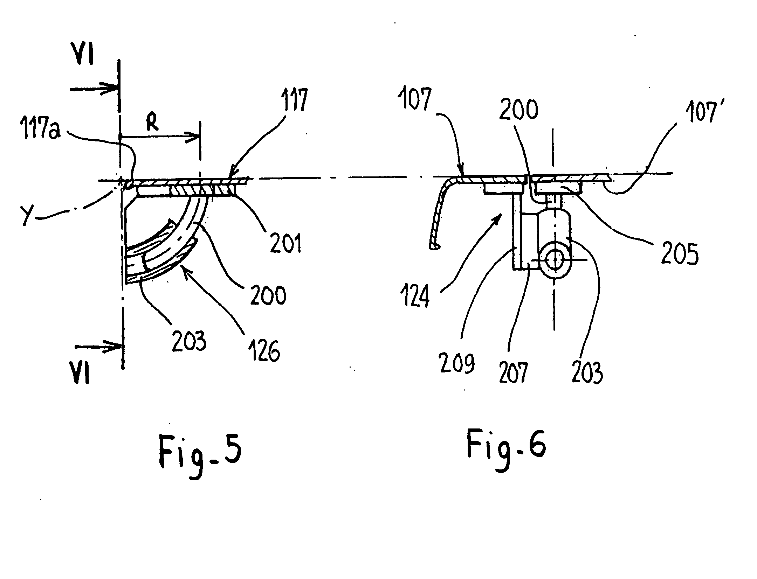

Les figures 5 et 6 montrent l'articulation entre le capot auxiliaire et le capot principal réalisé sous forme de telles charnières dégondables.

Sur la figure 5 une tige courbée 200 est fixée par l'intermédiaire d'une plaquette 201 sur une surface intérieure du capot auxiliaire 117, ceci au voisinage du bord avant 117a du capot auxiliaire. La tige courbée présente un rayon de courbure R qui est centré vers le bord avant du capot auxiliaire. Le capot principal 107 que l'on voit en coupe sur la figure 6 possède lui un tube courbé 203 de forme complémentaire à la tige courbée 200 et suivant le même rayon que cette tige. Le tube courbé 203 est fixé au capot principal par l'intermédiaire d'une plaquette 205 fixée sur une surface intérieure 107' du capot 107, la plaquette étant reliée au tube par deux éléments de liaison 207,209 ayant des formes de plaques. En position de fonctionnement lors de l'ouverture et de la fermeture du capot auxiliaire 117, la tige coudée 200 coulisse en étant guidée dans le tube complémentaire 203. Pour retirer le capot auxiliaire il suffit de le faire pivoter d'un angle tel que la tige sorte du tube de guidage: le capot auxiliaire est alors désolidarisé du capot principal 107 et peut ainsi être retiré du véhicule. En fonctionnement normal un système de butée (non représenté) permet de limiter l'angle de pivotement afin de ne pas dégonder le capot de façon involontaire. Le dispositif représenté n'est évidemment pas limitatif des modes de réalisation: à titre d'exemple la tige 200 courbée peut-être remplacée par un profilé plat courbé. De même, le tube courbé 203 peut-être remplacé par des galets dont les axes de rotation sont parallèles à l'axe de pivotement du capot auxiliaire et qui sont disposés de façon à guider la tige courbée suivant son rayon de courbure.

Figures 1 et 2, on constate encore que le capot principal borde donc le capot auxiliaire 117, ici sur trois côtés, dès lors que le capot 107 présente une forme générale de U avec deux parties latérales 107a, 107b globalement parallèles à l'axe X (capot fermé) et une partie transversale 107c reliant les deux parties latérales, à l'arrière, à proximité donc du bouclier arrière 125. Les deux capots 107, 117 s'ouvrent et se ferment donc ici par basculement autour d'axes parallèles à l'axe Y, à contresens l'un de l'autre.

A l'endroit de ces deux parties latérales 107a, 107b du capot principal, situées de part et d'autre du capot auxiliaire, deux barreaux 127, 129 sont liés à ce capot principal et s'étendent le long de ces parties latérales, essentiellement suivant deux directions parallèles entre elles.

Ces deux barreaux sont avantageusement montés pivotants, vers une extrémité arrière, autour de deux axes coaxiaux, respectivement 127d, 129d, sensiblement parallèles à l'axe de pivotement défini par les éléments de pivotement du capot principal par rapport au bâti structurel 3 (appelés troisièmes éléments de pivotement) appartenant donc ici auxdits pivots transversaux arrière 119a, 119b.

Ainsi, ces barreaux, ou arceaux car ils peuvent être de forme courbe, incurvés vers le bas, sont pivotants par rapport au capot principal, pour pivoter entre une position inclinée par rapport à ce capot 107 et une position rabattue contre lui, le long de ses parties latérales 107a, 107b.

Pour maintenir ces deux positions, chaque barreau latéral et, en regard, le capot principal pour la position rabattue et l'arrière du toit 5 pour la position inclinée, sont équipés de moyens complémentaires de verrouillage, respectivement 131a, 131b ; 133a, 133b, pour verrouiller ces barreaux latéraux dans les deux positions précitées.

Comme pour les systèmes de verrouillage déjà présentés, ces moyens complémentaires de verrouillage libérable pourront comprendre d'un côté un pêne mobile sur par exemple chaque barreau et des gâches fixées alors au capot principal pour la position rabattue et à l'arrière du toit 5 pour la position inclinée.

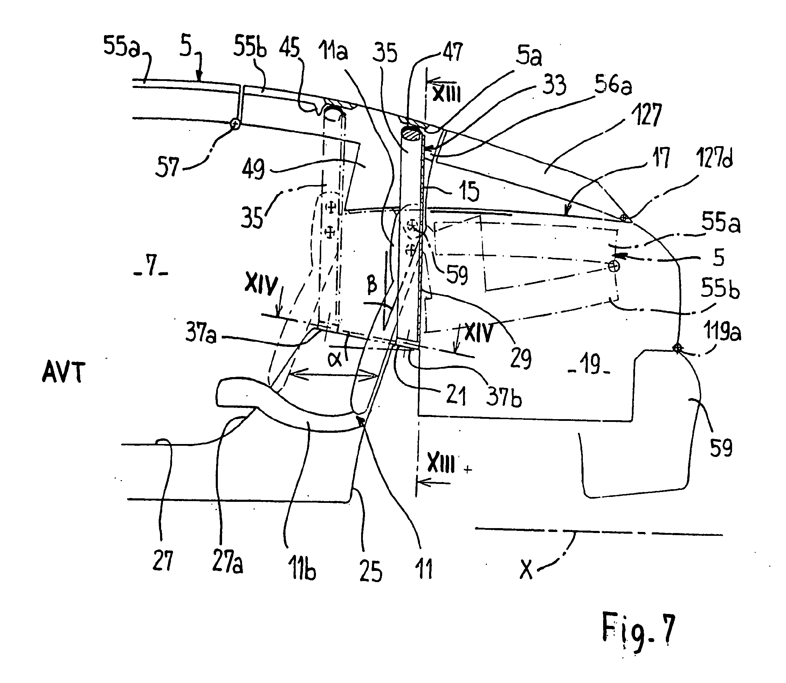

C'est pour cela que qu'en 56a,56b (voir également fig. 7), le toit 5 se prolonge sensiblement dans sa continuité longitudinale axiale, par deux excroissances latérales équipées des gâches 131a, 133a.

Favorablement, dans leur position inclinée, basculée vers le haut, les barreaux latéraux viendront sensiblement dans la continuité du profil du toit, lorsque celui-ci est disposé au dessus de l'habitacle 7.

Concernant ce toit 5, on prévoit qu'il s'agira a priori d'un toit mobile entre une première position dans laquelle il recouvre au moins en partie l'habitacle 7 et une deuxième position dans laquelle l'habitacle est au moins en partie dégagé, le toit étant alors situé à l'écart du dessus de l'habitacle. Favorablement, il s'agira même d'un toit articulé vis-à-vis du bâti 3, même si un toit retirable (par complète séparation avec le bâti 3 et donc le véhicule) est envisageable, par exemple un « hard top ».

Par ailleurs, ce toit 5 est ici un toit rigide, même si une capote souple articulée est envisageable. Il s'agit en particulier d'un toit comprenant au moins deux parties 55a,55b, respectivement une partie avant 55a et une partie arrière 55b située derrière la partie avant au moins dans ladite première position du toit au-dessus de l'habitacle 7, ces parties avant et arrière étant articulées l'une par rapport à l'autre autour d'un premier pivot 57 s'étendant sensiblement perpendiculairement à l'axe longitudinal X du véhicule, la partie arrière étant en outre articulée par rapport au bâti structurel 3 du véhicule autour d'un second pivot 59 s'étendant sensiblement perpendiculairement audit axe longitudinal X du véhicule, de manière que le passage du toit de sa première à sa seconde position inclut un pliage desdites parties avant et arrière du toit l'une vers l'autre.

La partie arrière 55b comprend même ici une partie centrale arrière 155b et deux parties latérales arrière 157b,159b (voir figures 1 à 4) montées autour d'axes de pivotement transversaux, sensiblement parallèles à l'axe Y dans cet état fermé du toit , pour s'articuler entre elles, entre les positions déployée au-dessus de l'habitacle et pliée à l'endroit de l'espace arrière 19 (traits mixtes figure 7).

Qu'il s'agisse d'une version « pick-up », ou transformable ainsi à partir par exemple d'un cabriolet ou d'un coupé, comme sur la figure 2, ou d'une version découvrable comme sur les figures 3 et 7, l'espace arrière de rangement (ou de chargement) 19 est situé en contre-bas du sommet de la vitre arrière 15 et, ici, du toit 5 alors dans son état de recouvrement de l'habitacle 7.

On notera que la vitre 15 pourra, comme ici, être mécaniquement ou fonctionnellement indépendante du toit 5 et être liée directement ou non au bâti 3 par rapport auquel elle peut être montée coulissante parallèlement à l'axe X, entre une position arrière illustrée en trait plein fig. 7 et une position plus avancée montrée en traits mixtes, augmentant d'autant la dimension axiale de l'espace arrière 19. Pour cela, la vitre ou lunette arrière 15 pourra être fixée à une armature 35 qui se dresse jusqu'au-dessus de la limite des dossiers 11a de sièges 11 situés en limite arrière de l'habitacle et qui descend jusqu'au niveau de glissières ou rails 21, lesquels s'étendent sensiblement suivant X (éventuellement avec une légère pente montante vers l'avant). L'armature 35 coulisse le long d'eux, tout en pouvant être verrouillée au moins dans deux positions limitant plus ou moins la longueur axiale de l'habitacle. A cette armature est fixée une cloison 29 prolongée au-dessus par la vitre supérieure 15 qui définissent ensemble une structure 33 de séparation entre l'habitacle 7 et l'espace arrière de rangement 19.

L'armature 35 peut en particulier consister en un arceau de sécurité s'étendant sur la largeur du véhicule et dont on voit une forme possible de réalisation sur les figures 2 et 3 (forme globalement en U dressé).

Figure 2, où le capot auxiliaire 117 a été retiré, par dégondage vis-à-vis du capot principal 107, l'espace 19 définit une plate-forme arrière à l'air libre, ouverte sur le dessus et l'arrière. Les barreaux latéraux 127,129 sont relevés et verrouillés aux excroissances latérales 56a,56b du toit. Le capot principal 107 est fermé, verrouillé au bâti 3.

Sur la figure 3, les deux capots 107, 117 sont montés sur le véhicule 1, en position rabattue et verrouillée.

Dans ce cas, l'espace arrière 19 de rangement (ou de chargement) est un coffre que ferment le capot principal 107 et le capot auxiliaire 117 et les dimensions relatives de ce coffre arrière et du toit 5 sont adaptées pour que le toit puisse être rangé dans le coffre arrière dans sa seconde position, dans la version ici envisagée, et privilégiée, d'un véhicule transformable et spécifiquement découvrable par repliement du toit dans le coffre arrière 19.

A partir d'un état habitacle 7 recouvert (par exemple dans le cas d'un coupé quatre places comme sur la figure 1, pour passer à un état pick-up quatre places, comme sur la figure 2, il suffit de déverrouiller le capot auxiliaire 117 par rapport au capot principal 107, c'est-à-dire libérer les uns des autres les moyens de verrouillage 131 ; 132, 134 et de procéder de même pour les moyens libérables de pivotement avant 123a, 123b ; capot 117 retiré, comme sur la figure 2, la plate-forme arrière 19 apparaît alors pleinement accessible et l'on peut par exemple fixer des barres transversales, ou directement un objet tel qu'un vélo, aux barreaux latéraux 127, 129 alors verrouillés à l'arrière du toit 5, en position dressée.

A partir du même état de la figure 1, toit recouvrant au moins partiellement l'habitacle 7, on peut également transformer le véhicule en véhicule découvert (cabriolet).

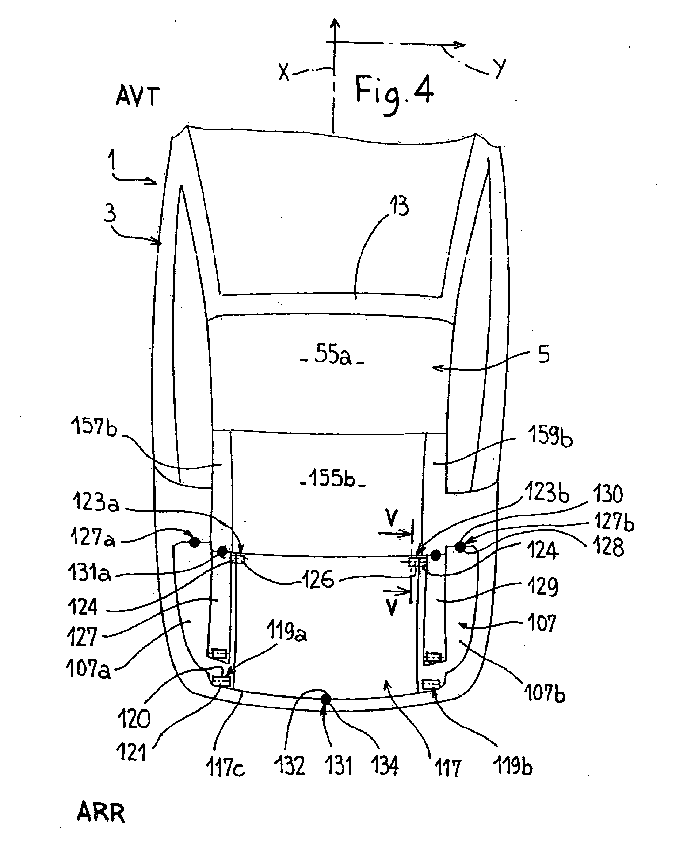

Si le toit 5 est un toit articulé au bâti 3 du véhicule, on procède comme suit, dans l'hypothèse par exemple où, comme ici, ce toit comprend les parties de toit déjà cités 55a, 155b, 157b et 159b (voir figs.4 et 8 à 12).

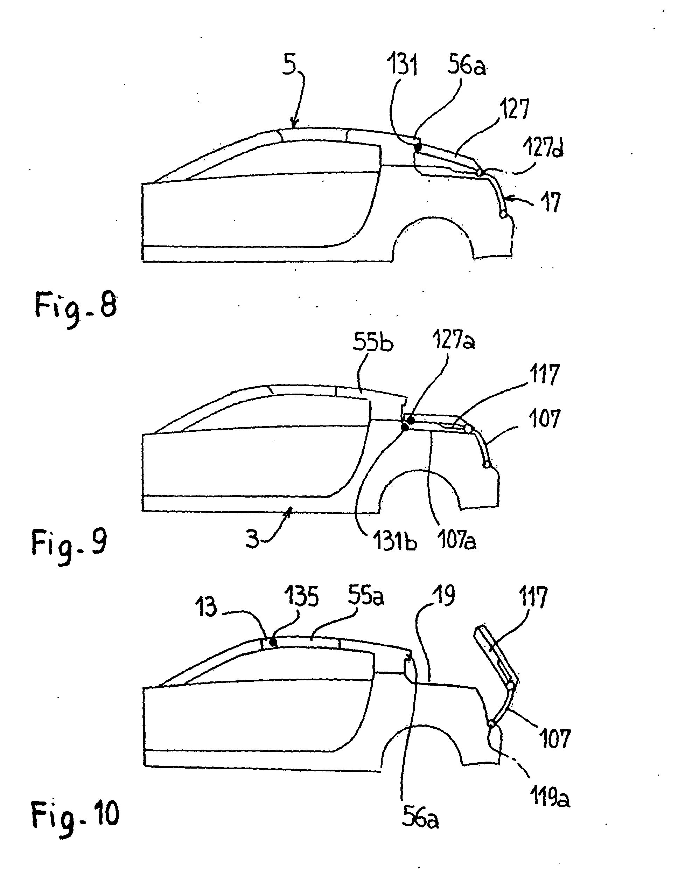

On déverrouille d'abord en particulier les moyens de verrouillage libérables repérés 135 notamment sur la figure 10 et prévus pour partie sur la partie de toit avant 55a et pour partie sur la traverse supérieure 13 de baie de pare-brise.

On s'assure également que les barreaux latéraux 127, 129 sont en position basse comme sur la figure 5; sinon on les déverrouille vis-à-vis de l'arrière du toit, tels qu'en 56a sur la figure 8, puis on les verrouille en position rabattue sur les parties latérales 107a, 107b du capot principal 107 en agissant sur les moyens de verrouillage précités tels que 133a sur la figure 4.

On peut alors déverrouiller les moyens de verrouillage avant tels que 127a sur les figures 4 et 9, permettant de libérer le capot principal 107 par rapport au bâti structurel 3.

Ce capot peut ainsi s'ouvrir, ici en basculant vers l'arrière autour donc de ses moyens de pivotement arrière tels que 119a, figure 10.

S'il est monté sur le capot principal, le capot auxiliaire 117 (alors verrouillé à lui) pivote en même temps que le capot principal, comme le montre la même figure.

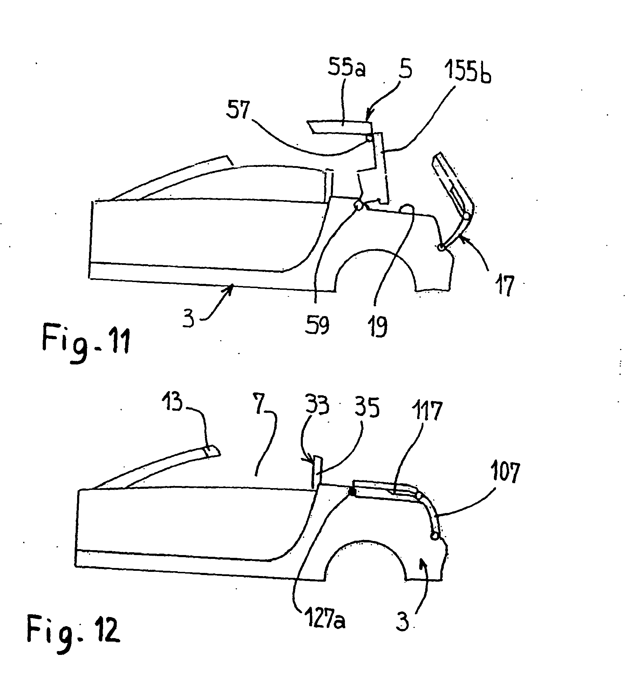

Figure 11, on voit que l'on peut alors commander (en particulier par toute commande automatique et motorisée connue) le toit 5 de manière à le ranger à l'intérieur du coffre arrière 19.

Dans la réalisation illustrée, la partie avant 55a du toit s'articule alors vis-à-vis de la partie arrière centrale 155b, autour du premier pivot 57 et cette même partie centrale arrière pivote elle-même par rapport au bâti structurel 3 autour du second pivot transversal arrière 57.

Parallèlement, les parties latérales arrière (157b, 159b) ont elles-même pivoté autour de leurs axes, de manière à réduire l'encombrement en largeur et à pouvoir passer latéralement dans la largeur autorisée par l'ouverture des capots.

En position fermée du toit, les parties latérales arrière 157b, 159b sont habituellement (et de façon connue) repliées vers l'intérieur et les parties avant et centrales arrière 55a, 155b sont rabattues l'une au-dessus de l'autre, sensiblement horizontalement.

On peut alors refermer les capots 107, 117, par basculement vers l'avant, comme on le voit sur la figure 12, où le capot auxiliaire 117 est toujours fermé et verrouillé, tandis que l'on vient de verrouiller à l'avant, en position rabattue, le capot principal 107, par action sur ses moyens de verrouillage tels que 127a.

L'habitacle 7 est alors entièrement découvert, sur le dessus et l'on voit, sur la figure 12, en limite arrière de celui-ci la structure de séparation 33, avec ici l'arceau transversal 35 porteur de la vitre arrière 15 qui forme bien une lunette arrière indépendante des mouvements du toit 5.

Avantageusement, si l'on a prévu les glissières 21 déjà cités, l'ouverture et la fermeture du toit 5 comme présenté ci-avant pour un toit articulé vis-à-vis du bâti structurel 3, pourra s'effectuer tant en position de la structure de séparation 33 coulissée vers l'arrière le long des glissières 21 qu'en position coulissée vers l'avant, alors que les dossiers 11a des sièges arrière 11 concernés imposent à ces sièges une profondeur d'assise réduite.

A cet égard, on notera encore figure 7 que les sièges arrière 11 (ou la banquette arrière, si c'en est une) présente un dossier de siège 11a fixe en inclinaison par rapport à l'assise 11b, mais monté coulissant sur les glissières telles que 21 dont l'axe 21 est donc dirigé sensiblement parallèlement à l'axe X, c'est-à-dire globalement dans la direction longitudinale du véhicule, même si ici la glissière 21 représentée, qui est dans ce cas rectiligne, présente une pente par rapport à l'horizontale X (angle α), l'arrière de la glissière étant plus bas que l'avant.

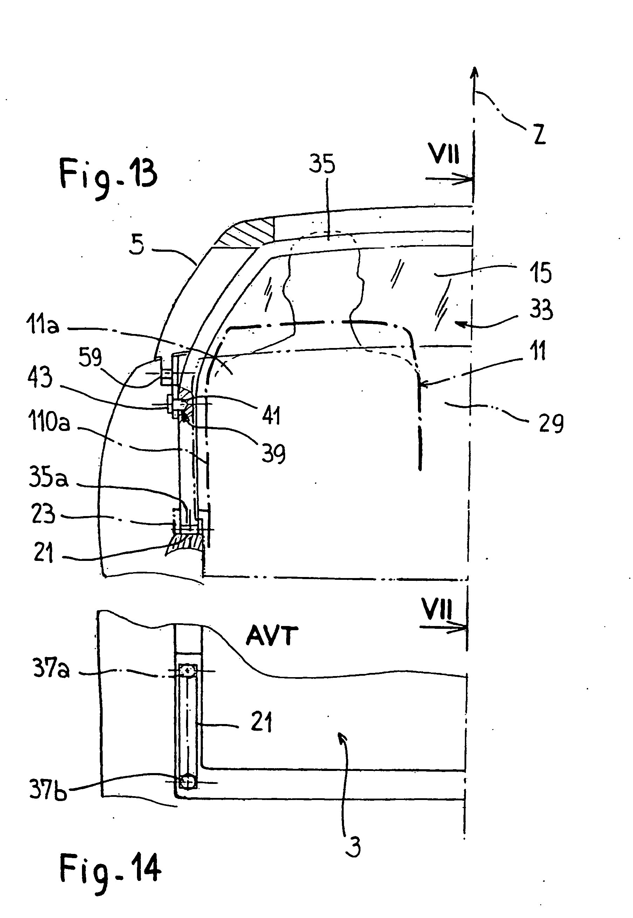

Même si la figure 13 se réfère à la variante de réalisation des figures 3 et 7, on y constate malgré tout que la limite latérale extérieure 110a du dossier coulissant 11a de la partie gauche illustrée des sièges arrière 11 est montée sur la glissière gauche correspondante 21 par l'intermédiaire d'une aile 23 formant une excroissance latérale et coopérant avec cette glissière 21.

Bien entendu, on imaginera la symétrie à droite de l'axe vertical Z, pour une glissière 21 droite et un environnement symétrique.

Figure 14, on voit les positions avant 37a et arrière 37b de la structure de séparation 33.

Revenant à la figure 13, on remarque que la glissière 21 définit un rebord du bâti structurel 3 à l'endroit du passage de roue arrière 25, la glissière 21 se raccordant à l'avant au sommet de la pente 27a du profil 27 de bas de caisse arrière qui est profilé pour recevoir la partie inférieure de la portière arrière concernée.

Les dossiers 11a de sièges étant donc prévus pour a priori maintenir leur légère inclinaison β vers l'arrière par rapport à la verticale, favorisant ainsi une assise normalement inclinée du passager sur ce siège, le dosser 11a est favorablement en appui en partie haute arrière contre une cloison 29 qui est surmontée, ou qui intègre en partie haute, la vitre arrière 15 qui s'étend ici globalement suivant l'axe Y. Elle pourrait bien entendu être cintrée et/ou ne pas être verticale, mais légèrement inclinée vers l'avant ou vers l'arrière, de même d'ailleurs que la cloison 29, en fonction du design et autres contingences.

L'ensemble constitué par la cloison 29 et la vitre supérieure 15 définit ladite structure 33 de séparation entre l'habitacle 7 et l'espace arrière de rangement 19, cette structure 33 étant liée mécaniquement au dossier arrière 11 et coulissant donc avec lui. La structure de séparation 33 pourrait aussi être réalisée différemment.

Ici, cette structure de séparation est fixée à une armature 35 se dressant jusqu'au-dessus de la limite supérieure des dossiers 11a de siège et descendant jusqu'au niveau des glissières ou rails 21, comme on le voit sur la figure 13 pour la partie gauche.

L'armature 35 peut en particulier consister en un arceau de sécurité dont on voit une forme possible de réalisation sur cette figure 3 (forme globalement en U renversé s'étendant sur toute la largeur du véhicule).

Les dossiers 11a de sièges ont été ici considérés sans appui-tête; ils peuvent toutefois en intégrés, ou être surmontés par de tels appui-têtes, lesquels ne devront raisonnablement pas dépasser en hauteur la limite haute de l'armature 35.

Figure 13, on remarque que l'armature 35 est montée en partie basse, en 35a, sur la glissière correspondante 21, pour y glisser.

Ce peut être uniquement par le glissement de l'armature 35 que pourra se faire le coulissement des dossiers 11a de sièges dans la direction de ces glissières, les dossiers étant alors nécessairement fixés à cette armature, par exemple par boulonnage ou rivetage de la partie structurelle du dossier.

Figure 7, on a par ailleurs repéré en 37a, 37b les positions respectivement avant et arrière de l'armature 35, c'est-à-dire donc de la structure de séparation 33, positions dans chacune desquelles cette structure de séparation, et en particulier l'armature 35, est verrouillée à une partie en regard du bâti structurel 3, suite donc à un coulissement du dossier 11 concerné.

Figure 13, c'est le verrou 39 qui permet ces verrouillages. Il comprend un pêne mobile 41 adapté pour s'engager de manière libérable dans un parmi plusieurs orifices d'une partie de réception fixe 43 du bâti structurel 3, ceci au moins dans les deux positions de verrouillage 37a et 37b.

Dans la position de verrouillage longitudinale arrière 37b, le dossier 11a est dans sa position normale arrière. La profondeur d'assise est par contre assez nettement réduite, et plus haute, dans la position de verrouillage avant 37a.

Sur la figure 7, on remarquera également que le coulissement vers l'avant (AVT) du dossier 11a, au-delà de la position de verrouillage avant 37a est empêché par la butée 45 formée en face inférieure du toit 5, de manière que viennent buter contre elle une partie de la structure de séparation 33, et en particulier ici la barre transversale supérieure de l'armature 35.

En position de coulissement inverse (position 37b) on peut prévoir que la même structure de séparation 33 pourra venir buter contre une butée arrière (non représentée) de la structure 3 du véhicule située par exemple vers la base de la cloison 29.

Des moyens d'étanchéité 47, tels que des patins de frottement, ici fixés en haut de l'armature 35, sont interposés entre la structure de séparation 33 et la face inférieure 5a en regard du toit 5 pour assurer un glissement étanche (à l'eau et plus généralement à l'humidité) de la structure 33 vis-à-vis du toit 5 et de l'extérieur.

Avantageusement, cette étanchéité sera prolongée latéralement à l'endroit des parties latérales de toit définissant les custodes (zone 49 pour l'une de ces parties latérales sur la figure 1).

On aura compris qu'un tel montage de dossiers coulissants est adaptable sur différents type de véhicule, qu'il s'agisse notamment de véhicule à toit fixe, par exemple berline ou monospace, ou d'un véhicule à toit découvrable, que le toit soit entièrement retirable (par exemple toit hard-top) ou articulé sur le bâti structurel 3 du véhicule, toit rigide ou capote souple.

Concernant le glissement des dossiers 11a, ce pourrait être directement l'armature des dossiers 11a de sièges qui serait verrouillée, de manière libérable, par rapport au bâti structurel 3 et donc par rapport aux glissières 21, ceci dans au moins deux positions de coulissement le long des glissières, et en particulier plus ou moins en avant ou en arrière par rapport à l'espace de rangement arrière 19.

L'axe arrière de pivot 119a du capot 107 est situé sensiblement au niveau de la partie supérieure du bouclier arrière 59 du véhicule.

## Revendications

1. Véhicule comprenant :
- un bâti structurel (3),
- un habitacle,
- un espace arrière de rangement (19) situé derrière l'habitacle (7) par rapport à l'avant du véhicule,
- des sièges situés dans cet habitacle, ces sièges (11) comprenant un dossier (11a) et une assise (11b),
- des glissières (21) fixées au bâti structurel (3)
- et une structure (33,35) de séparation entre l'habitacle (7) et l'espace arrière de rangement (19), la structure de séparation et lesdits dossiers (11a) des sièges étant liés ensemble, de manière à définir un ensemble coulissant le long des glissières (21) et par rapport à l'assise (11b) des sièges concernés, en réduisant la profondeur d'assise sensiblement suivant l'axe longitudinal (X) du véhicule, par coulissement vers l'avant du véhicule de cet ensemble, et en augmentant cette même dimension, par coulissement vers l'arrière de l'ensemble, avec alors la profondeur d'assise normale,
**caractérisé en ce que :**
- ce véhicule est découvrable et comprend ainsi, en outre, un toit mobile (55) pouvant occuper une première position dans laquelle il recouvre au moins en partie l'habitacle (7) et une deuxième position dans laquelle l'habitacle est au moins en partie dégagé, ledit toit (55) étant alors situé à l'écart du dessus de l'habitable qu'il recouvrait dans la première position,
- l'assise (11b) des sièges (11) demeure fixe, tant en position coulissée vers l'arrière desdits dossiers qu'en position coulissée au maximum vers l'avant dans laquelle une profondeur d'assise réduite demeure.

2. Véhicule selon la revendication 1, **caractérisé en ce que** la structure de séparation comprend une armature (35) de renfort et de sécurité se dressant jusqu'au dessus de la limite supérieure desdits dossiers (11a) de sièges, s*'*étendant globalement transversalement à l'axe longitudinal (X) du véhicule et descendant jusqu'au niveau des glissières (21), lesquelles sont situées de part et d'autre des sièges.

3. Véhicule selon la revendication 2, **caractérisé en ce que** des moyens d'étanchéité (47) sont, en haut de l'armature (35), interposés entre ce toit (5,55) et la structure de séparation (33,35), pour assurer un glissement étanche à l'eau entre cette structure de séparation et le toit vis-à-vis du milieu extérieur.

4. Véhicule selon la revendication 3, **caractérisé en ce que** la structure de séparation comprend une vitre arrière (15) indépendante du toit (55) et fixée à elle, qui définit la lunette arrière du véhicule, en s'étendant sensiblement perpendiculairement à l'axe longitudinal (X) de ce véhicule et qui coulisse ainsi avec lesdits dossiers (11a) de sièges, le long des glissières (21).

5. Véhicule selon l'une quelconque des revendications précédentes **caractérisé en ce que** les glissières (21) sont situées latéralement, au delà de limites latérales extérieures (110a) des dossiers (11a) des sièges considérés, à leur niveau, et s'élèvent de l'arrière vers l'avant.

6. Véhicule selon l'une quelconque des revendications précédentes, **caractérisé en ce que** le toit mobile (55) est monté articulé sur le bâti structurel (3) du véhicule entre ses première et seconde positions, sensiblement à l'endroit de la position coulissée vers l'arrière dudit dossier (11a) de sièges avec la profondeur d'assise normale, de sorte que ledit toit peut être rangé ou sorti de l'espace de rangement arrière (19), quelle que soit la position dudit ensemble constitué par les dossiers (11a) desdits sièges et la structure de séparation (33,35) entre les positions de coulissement arrière et avant.

7. Véhicule selon la revendication 6, **caractérisé en ce que** :
- le toit mobile (55) comprend au moins deux parties (55a, 55b), respectivement une partie avant (55a) et une partie arrière (55b) située derrière la partie avant au moins dans ladite première position du toit au-dessus de l'habitacle (7), ces parties avant et arrière étant articulées l'une par rapport à l'autre autour d'un premier pivot (57) s'étendant sensiblement perpendiculairement à l'axe longitudinal (X) du véhicule, la partie arrière étant en outre articulée par rapport au bâti structurel (3) du véhicule autour d'un second pivot (59) s'étendant sensiblement perpendiculairement audit axe longitudinal (X) du véhicule, de manière que le passage du toit de sa première à sa seconde position inclut un pliage desdites parties avant et arrière du toit l'une vers l'autre,
- et, en position coulissée arrière des dossiers (11a), disposés alors en limite arrière de l'habitacle, le second pivot (59) et ces dossiers sont situés sensiblement dans un même plan transversal audit axe longitudinal (X) du véhicule.

8. Véhicule selon la revendication 4 ou l'une des revendications 5 à 7 s'y rattachant, **caractérisé en ce que** :
- il comprend un capot principal (107) de recouvrement de l'espace arrière (19) de rangement, ce capot principal bordant, au moins localement un capot auxiliaire (117) qui s'étend sensiblement en partie centrale du capot principal et est monté articulé par rapport à lui par l'intermédiaire de premiers éléments de pivotement coopérant avec des seconds éléments complémentaires de pivotement fixés au, et vers l'avant du, capot principal, lequel comprend en outre des troisièmes éléments de pivotement situés vers l'arrière et adaptés pour coopérer avec des quatrième éléments de pivotement fixés à un bâti structurel du véhicule pour permettre un pivotement de ce capot principal par rapport au bâti structurel (3) du véhicule, lorsque le capot principal est monté sur ce bâti structurel,
- et, en position coulissée vers l'arrière de la lunette arrière (15) du véhicule, disposée alors en limite arrière de l'habitacle et du toit, les premiers et seconds éléments de pivotement (124,126) et la lunette arrière (15) sont situés sensiblement dans un même plan transversal audit axe longitudinal (X) du véhicule.

9. Véhicule selon la revendication 7 ou la revendication 8, **caractérisé en ce que** les premiers éléments de pivotement du capot auxiliaire et les seconds éléments complémentaires de pivotement du capot principal, pour le pivotement relatif entre le capot auxiliaire et le capot principal, définissent ensemble des moyens de charnières dégondables, autorisant une séparation entre le capot auxiliaire et le capot principal.

10. Véhicule selon l'une quelconque des revendications 7 à 9, **caractérisé en ce qu'**à l'endroit de deux parties latérales (107a, 107b) du capot principal (107) situées de part et d'autre du capot auxiliaire, des barreaux (107, 109) sont liés à ce capot principal et s'étendent le long de ces parties latérales, essentiellement suivant deux directions parallèles entre elles et sensiblement perpendiculaires à l'axe de pivotement défini par lesdits troisièmes éléments de pivotement du capot principal (107) par rapport au bâti structurel (3) du véhicule, lesdits barreaux latéraux étant pivotants, vers une extrémité, par rapport au capot principal, pour pivoter entre une position inclinée par rapport à ce capot principal et une position rabattue contre le capot principal, le long de ses parties latérales.

11. Procédé pour rendre modulaire un véhicule présentant un axe longitudinal (X) et comprenant un habitacle (7), un bâti structurel (3), des sièges situés dans l'habitacle et comprenant un dossier (11a) et une assise (11b), un espace arrière de rangement (19) situé derrière l'habitacle (7) par rapport à l'avant du véhicule, et dans lequel, pour adapter suivant l'axe longitudinal (X) une dimension relative sensiblement suivant cet axe entre l'espace arrière de rangement (19) et l'habitacle (7) , on déplace une structure (33, 35) de séparation entre ledit habitacle (7) et ledit espace arrière de rangement (19), par coulissement longitudinal entre une première position coulissée vers l'avant du véhicule et une deuxième position coulissée vers l'arrière de ce véhicule,
**caractérisé en ce que :**
- on rend le véhicule découvrable en le pourvoyant d'un toit mobile (55) pouvant occuper une première position dans laquelle il recouvre au moins en partie l'habitacle (7) et une deuxième position dans laquelle l'habitacle est au moins en partie dégagé, ledit toit (55) étant alors situé à l'écart du dessus de l'habitacle qu'il recouvrait dans la première position,
- on équipe ce véhicule d'un capot (107) de recouvrement de l'espace (19) arrière de rangement,
- on rend articulable par rapport au bâti structurel (3) ce capot (107), par pivotement autour d'un axe de pivotement transversal par rapport à l'axe longitudinal (X) du véhicule situé vers l'arrière dudit capot,
- on adapte les dimensions relatives entre l'espace arrière de rangement (19) et le toit mobile (55) pour que, tout en maintenant une profondeur d'assise (11b) réduite en position des dossiers coulissée au maximum vers l'avant, le toit puisse, dans cette deuxième position, être reçu dans l'espace arrière de rangement,
- et on place le véhicule dans un état découvert, en faisant basculer vers l'arrière du véhicule le capot (107) et en disposant le toit mobile (55) dans sa deuxième position, à l'intérieur de l'espace arrière de rangement (19).

12. Procédé selon la revendication 11, **caractérisé en ce qu**'on équipe la structure (33, 35) de séparation d'une armature (35) de renfort et de sécurité se dressant jusqu'au-dessus de la limite supérieure desdits dossiers (11a) de sièges et s*'*étendant globalement transversalement à l'axe longitudinal (X) du véhicule, ainsi que d'une vitre arrière (15) s'étendant également globalement transversalement à l'axe longitudinal (X) du véhicule, vers l'extrémité longitudinale arrière de habitacle (7), et on adapte l'espace longitudinalement disponible sensiblement à l'endroit de l'espace arrière de rangement (19) en faisant coulisser, vers l'avant ou vers l'arrière du véhicule, l'armature (35) et la vitre arrière (15) en même temps que lesdits dossiers (11a) des sièges concernés, le long de glissières (21) jusqu'où descend l'armature (35) et qui sont fixés au bâti structurel (3) et situées de part et d'autre des sièges.

13. Procédé selon la revendication 11, **caractérisé en ce que**, pour couvrir avec le toit mobile (55) ou découvrir à volonté l'habitacle (7), on monte de façon articulée le toit mobile (55) sur le bâti structurel (3) du véhicule entre ses première et deuxième positions, sensiblement à l'endroit d'une position arrière de ladite structure (33, 35) de séparation, de sorte que le toit peut être rangé ou sorti de l'espace de rangement arrière (19) que la structure de séparation (33, 35) soit en position de coulissement arrière ou en position de coulissement plus avant.

## Claims

1. A vehicle comprising:
- a structural framework (3),
- a passenger compartment,
- a rear storage space (19) located behind the passenger compartment (7) relative to the front of the vehicle,
- seats located in said passenger compartment, said seats (11) comprising backrests (11a) and seat cushions (11b),
- runners (21) fixed to the structural framework (3)
- and a dividing structure (33, 35) between the passenger compartment (7) and the rear storage space (19), the dividing structure and said backrests (1 1a) of the seats being joined together so as to define an assembly sliding along the runners (21) and relative to the seat cushions (11b) of the seats concerned, reducing the depth of the cushion essentially along the longitudinal axis (X) of the vehicle by sliding of said assembly towards the front of the vehicle, and increasing said dimension by sliding of said assembly towards the rear, in the latter case with normal depth of the cushion,
**characterized in that**:
- said vehicle is a convertible and therefore also has a movable roof (55) capable of occupying a first position in which it at least partly covers the passenger compartment (7) and a second position in which the passenger compartment is at least partly uncovered, said roof (55) then being positioned away from the top of the passenger compartment which it was covering in the first position,
- the seat cushions (11b) of the seats (11) remain fixed, both in the position in which said backrests are slid towards the rear and in the position in which they are slid as far as possible towards the front leaving a reduced depth of seat cushion.

2. A vehicle according to Claim 1, **characterized in that** the dividing structure includes a strengthening safety frame (35) reaching above the tops of said backrests (1 1a) of the seats, extending as a whole transverse to the longitudinal axis (X) of the vehicle and descending to the level of the runners (21) which are located on both sides of the seats.

3. A vehicle according to Claim 2, **characterized in that** at the top of the frame (35), sealing means (47) are interposed between said roof (5, 55) and the dividing structure (33, 35), so as to ensure a watertight sliding action between said dividing structure and the roof in respect of the outside environment.

4. A vehicle according to Claim 3, **characterized in that** the dividing structure includes a rear window pane (15), which is independent of the roof (55), is fixed to said dividing structure and defines the rear window of the vehicle, extending substantially perpendicular to the longitudinal axis (X) of said vehicle, said window pane (15) thus sliding with said backrests (11a) of the seats along the runners (21).

5. A vehicle according to any one of the preceding claims, **characterized in that** the runners (21) are located at the sides, beyond the lateral outer edges (110a) of the backrests (11a) of the seats concerned and level with them, and rise from the rear towards the front.

6. A vehicle according to any one of the preceding claims, **characterized in that** the movable roof (55) is pivot-mounted on the structural framework (3) of the vehicle between its first and second positions, more or less at the location of the position of said backrests (1 1a) when they are slid towards the rear, with normal depth of seat cushion, so that said roof can be stowed away or made to emerge from the rear storage space (19), regardless of the position of said assembly consisting of the backrests (11a) and the dividing structure (33, 35) between the positions slid towards the rear and towards the front.

7. A vehicle according to Claim 6, **characterized in that**:
- the movable roof (55) is made up of at least two sections (55a, 55b), respectively a front section (55a) and a rear section (55b), said rear section (55b) being located behind the front section (55a) at least in said first position of the roof above the passenger compartment (7), these front and rear sections being articulated relative to one another about a first pivot (57) extending substantially perpendicular to the longitudinal axis (X) of the vehicle, the rear section also being articulated relative to the structural framework (3) of the vehicle about a second pivot (59) extending substantially perpendicular to said longitudinal axis (X) of the vehicle, so that the movement of the roof from its first position to its second position involves said front and rear roof sections folding towards one another,
- and, in the position when the backrests (11a) are slid towards the rear, thus are disposed at the rear limit of the passenger compartment, the second pivot (59) and said backrests are located more or less in the same plane transverse to said longitudinal axis (X) of the vehicle.

8. A vehicle according to Claim 4 or any one of the related Claims 5 to 7,
**characterized in that**:
- it has a main cover (107) for covering the rear storage space (19), this main cover surrounding, at least in places, an auxiliary cover (117) which is located essentially in the central portion of the main cover and is articulated relative thereto by means of first pivoting elements cooperating with second corresponding pivoting elements fixed to, and towards the front of, the main cover, which also has third pivoting elements located towards the rear and designed to cooperate with fourth pivoting elements fixed to a structural framework of the vehicle so as to allow a pivoting action of said main cover relative to the structural framework (3) of the vehicle when the main cover is mounted on said structural framework,
- and, in the position of the rear window (15) of the vehicle when it is slid towards the rear, thus is disposed at the rear limit of the passenger compartment and of the roof, the first and second pivoting elements (124, 126) and the rear window (15) are located more or less in the same plane transverse to said longitudinal axis (X) of the vehicle.

9. A vehicle according to Claim 7 or Claim 8, **characterized in that** the first pivoting elements of the auxiliary cover and the second corresponding pivoting elements of the main cover, for the relative pivoting action between the auxiliary cover and main cover, together define hinge means with removable pins, allowing a separation between auxiliary cover and main cover.

10. A vehicle according to any one of Claims 7 to 9, **characterized in that** at the location of two side sections (107a, 107b) of the main cover (107) located on either side of the auxiliary cover, bars (107, 109) are attached to said main cover and extend along said side sections, essentially in two directions parallel to one another and approximately perpendicular to the pivot axis defined by said third elements for pivoting of the main cover (107) relative to the structural framework (3) of the vehicle, said side bars pivoting, towards one end, relative to the main cover, so as to pivot between an inclined position relative to said main cover and a closed position against the main cover, along its side sections.

11. A method of making a modular vehicle, said vehicle having a longitudinal axis (X), and comprising a passenger compartment (7), a structural framework (3), seats located in the passenger compartment and comprising backrests (11a) and seat cushions (11b), a rear storage space (19) located behind the passenger compartment (7) relative to the front of the vehicle, and in which, for adjusting along the longitudinal axis (X) a relative dimension substantially along said axis between the rear storage space (19) and the passenger compartment (7), a dividing structure (33, 35) provided between said passenger compartment (7) and said rear storage space (19) is moved by a longitudinal sliding action between a first position slid towards the front of the vehicle and a second position slid towards the rear of said vehicle,
**characterized in that**:
- the vehicle is made into a convertible by providing it with a movable roof (55) capable of occupying a first position in which it at least partly covers the passenger compartment (7) and a second position in which the passenger compartment is at least partly uncovered, said roof (55) then being positioned away from the top of the passenger compartment which it was covering in the first position,
- said vehicle is provided with a cover (107) for covering the rear storage space (19),
- said cover (107) is made so as to pivot relative to the structural framework (3), i.e. it is designed to pivot about a pivot axis which is transverse relative to the longitudinal axis (X) of the vehicle and is located towards the rear of said cover,
- the relative dimensions between the rear storage space (19) and the movable roof (55) are adapted so that, whilst retaining a reduced depth of seat cushion (11b) in the position in which the backrests are slid as far as possible towards the front, the roof can, in this second position, be accommodated in the rear storage space,
- and the vehicle is brought into its uncovered state, by having the cover (107) swing towards the rear of the vehicle and by bringing the movable roof (55) into its second position inside the rear storage space (19).

12. A method according to Claim 11, **characterized in that** the dividing structure (33, 35) is provided with a strengthening safety frame (35) reaching above the tops of said backrests (1 1a) and extending as a whole transverse to the longitudinal axis (X) of the vehicle, as well as with a rear window pane (15), likewise extending as a whole transverse to the longitudinal axis (X) of the vehicle, towards the rear longitudinal end of the passenger compartment (7), and the space available in longitudinal direction is adjusted more or less at the location of the rear storage space (19) by causing the frame (35) and rear window pane (15) to slide towards the front or towards the rear of the vehicle, at the same time as said backrests (11a) of the seats concerned, along runners (21) to the point where the frame (35) descends, said runners being fixed to the structural framework (3) and located on both sides of the seats.

13. A method according to Claim 11, **characterized in that** for covering the passenger compartment (7) with the movable roof (55) or for uncovering it at will, the movable roof (55) is articulated with the structural framework (3) of the vehicle between its first and second positions, more or less at the location of a rear position of said dividing structure (33, 35), so that the roof can be stowed away or made to emerge from the rear storage space (19) regardless of whether the dividing structure (33, 35) is in the rear sliding position or in the more forward sliding position.

## Patentansprüche

1. Fahrzeug, umfassend:
- einen Tragrahmen (3),
- einen Fahrgastraum,
- einen hinteren Stauraum (19), der bezüglich des Fahrzeugfrontbereichs hinter dem Fahrgastraum (7) liegt,
- in diesem Fahrgastraum befindliche Sitze, wobei diese Sitze (11) eine Rückenlehne (11a) und eine Sitzfläche (11b) aufweisen,
- am Tragrahmen (3) befestigte Gleitführungen (21),
- und einen Trennaufbau (33, 35) zum Trennen zwischen Fahrgastraum (7) und hinterem Stauraum (19), wobei der Trennaufbau und die Rückenlehnen (11a) der Sitze so zusammenhängen, dass sie eine entlang der Gleitführungen (21) und bezüglich der Sitzfläche (11b) der betreffenden Sitze gleitbewegliche Einheit definieren, indem die Sitzflächentiefe im wesentlichen entlang der Fahrzeuglängsachse (X) durch Gleiten dieser Einheit zum Fahrzeugfrontbereich vermindert wird und indem diese gleiche Abmessung durch Gleiten der Einheit zum Heckbereich mit dann normaler Sitzflächentiefe vergrößert wird,
**dadurch gekennzeichnet, dass**
- dieses Fahrzeug abdeckbar ist und somit ferner ein bewegliches Dach (55) aufweist, das eine erste Stellung einnehmen kann, in welcher es zumindest teilweise den Fahrgastraum (7) überdeckt, sowie eine zweite Stellung, in welcher der Fahrgastraum zumindest teilweise freiliegt, wobei das Dach (55) dann von der Oberseite des Fahrgastraums beabstandet liegt, den es in der ersten Stellung überdeckt hat,
- die Sitzfläche (11 B) der Sitze (11) sowohl in nach hinten gerichteter Gleitstellung der Rückenlehnen als auch in maximal nach vorne gerichteter Gleitstellung fest bleibt, in welcher eine verminderte Sitzflächentiefe bestehen bleibt.

2. Fahrzeug nach Anspruch 1, **dadurch gekennzeichnet, dass** der Trennaufbau eine Verstärkungs- und Sicherheitsarmierung (35) aufweist, die sich bis über die obere Begrenzung der Rückenlehnen (11a) der Sitze erstreckt, insgesamt quer zur Fahrzeuglängsachse (X) verläuft und bis in den Bereich der Gleitführungen (21) abfällt, die sich beiderseits der Sitze befinden.

3. Fahrzeug nach Anspruch 2, **dadurch gekennzeichnet, dass** zwischen diesem Dach (5, 55) und dem Trennaufbau (33, 35) im oberen Bereich der Armierung (35) Dichtmittel (47) eingefügt sind, um eine gegenüber der äußeren Umgebung wasserdichte Gleitbewegung zwischen diesem Trennaufbau und dem Dach zu gewährleisten.

4. Fahrzeug nach Anspruch 3, **dadurch gekennzeichnet, dass** der Trennaufbau eine hintere Fensterscheibe (15) aufweist, die daran befestigt und unabhängig vom Dach (55) ist und die Heckscheibe des Fahrzeugs definiert, indem sie im wesentlichen senkrecht zur Längsachse (X) dieses Fahrzeugs verläuft und somit mit den Rückenlehnen (11a) der Sitze entlang der Gleitführungen (21) gleitet.

5. Fahrzeug nach einem der vorangehenden Ansprüche, **dadurch gekennzeichnet, dass** die Gleitführungen (21) seitlich über äußere Seitenbegrenzungen (110a) der Rückenlehnen (11a) der betrachteten Sitze hinaus in ihrer Höhe liegen und sich von hinten nach vorne erheben.

6. Fahrzeug nach einem der vorangehenden Ansprüche, **dadurch gekennzeichnet, dass** das bewegliche Dach (55) am Tragrahmen (3) des Fahrzeugs zwischen seiner ersten und seiner zweiten Stellung gelenkig gelagert ist, und zwar im wesentlichen an der Stelle der nach hinten gerichteten Gleitstellung der Sitzrückenlehne (11a) mit der normalen Sitzflächentiefe, so dass das Dach verstaut bzw. aus dem hinteren Stauraum (19) herausgefahren werden kann, unabhängig von der Stellung der aus den Rückenlehnen (11a) der Sitze und dem Trennaufbau (33, 35) bestehenden Einheit zwischen der hinteren und der vorderen Gleitstellung.

7. Fahrzeug nach Anspruch 6, **dadurch gekennzeichnet, dass**
- das bewegliche Dach (55) zumindest zwei Teile (55a, 55b) aufweist, nämlich ein Vorderteil (55a) und ein Hinterteil (55b), das zumindest in der ersten Stellung des Dachs oberhalb des Fahrgastraums (7) hinter dem Vorderteil liegt, wobei dieses Vorderteil und Hinterteil um einen ersten Drehzapfen (57) zueinander gelenkig sind, der sich im wesentlichen senkrecht zur Fahrzeuglängsachse (X) erstreckt, wobei das Hinterteil ferner bezüglich des Fahrzeugtragrahmens (3) um einen zweiten Drehzapfen (59) gelenkig ist, der sich im wesentlichen senkrecht zur Fahrzeuglängsachse (X) erstreckt, so dass der Übergang des Dachs aus seiner ersten in seine zweite Stellung ein Umfalten des Dachvorteils und des Dachhinterteils in Richtung zueinander umfasst,
- und dass in der hinteren Gleitstellung der Rückenlehnen (11a), die damit an der hinteren Begrenzung des Fahrgastraums angeordnet sind, der zweite Drehzapfen (59) und diese Rückenlehnen im wesentlichen in einer gleichen Ebene quer zur Fahrzeuglängsachse (X) liegen.

8. Fahrzeug nach Anspruch 4 oder einem der darauf rückbezüglichen Ansprüche 5 bis 7, **dadurch gekennzeichnet, dass**
- es eine Hauptabdeckung (107) zum Überdecken des hinteren Stauraums (19) aufweist, wobei diese Hauptabdeckung zumindest bereichsweise eine Nebenabdeckung (117) einfasst, die sich im wesentlichen im Mittelbereich der Hauptabdeckung erstreckt und bezüglich dieser über erste Schwenkelemente gelenkig gelagert ist, die mit komplementären zweiten Schwenkelementen zusammenwirken, die an der Hauptabdeckung zu deren vorderen Bereich hin befestigt sind, die ferner dritte Schwenkelemente aufweist, die zum hinteren Bereich hin liegen und darauf abgestimmt sind, mit vierten Schwenkelementen zusammenzuwirken, die an einem Tragrahmen des Fahrzeugs befestigt sind, um ein Verschwenken dieser Hauptabdeckung bezüglich des Tragrahmens (3) des Fahrzeugs zu gestatten, wenn die Hauptabdeckung an diesem Tragrahmen montiert ist,
- und dass in der nach hinten gerichteten Gleitstellung der Fahrzeugheckscheibe (15), die somit an der hinteren Begrenzung des Fahrgastraums und des Daches angeordnet ist, die ersten und die zweiten Schwenkelemente (124, 126) und die Heckscheibe (15) im wesentlichen in einer gleichen Ebene quer zur Fahrzeuglängsachse (X) liegen.

9. Fahrzeug nach Anspruch 7 oder Anspruch 8, **dadurch gekennzeichnet, dass** die ersten Schwenkelemente der Nebenabdeckung und die komplementären zweiten Schwenkelemente der Hauptabdeckung zum relativen Verschwenken zwischen der Nebenabdeckung und der Hauptabdeckung gemeinsam aushängbare Scharniermittel definieren, die eine Trennung zwischen Nebenabdeckung und Hauptabdeckung gestatten.

10. Fahrzeug nach einem der Ansprüche 7 bis 9, **dadurch gekennzeichnet, dass** an der Stelle von zwei Seitenteilen (107a, 107b) der Hauptabdeckung (107), die beiderseits der Nebenabdeckung liegen, Stäbe (107, 109) mit dieser Hauptabdeckung verbunden sind und sich entlang dieser Seitenteile im wesentlichen in zwei Richtungen erstrecken, die parallel zueinander und im wesentlichen senkrecht zur Schwenkachse verlaufen, die von den dritten Schwenkelementen der Hauptabdeckung (107) bezüglich des Tragrahmens (3) des Fahrzeugs definiert wird, wobei die Seitenstäbe bezüglich der Hauptabdeckung zu einem Ende hin verschwenkbar sind, um zwischen einer zu dieser Hauptabdeckung geneigt verlaufenden Stellung und einer an die Hauptabdeckung umgeklappten Stellung entlang dieser Seitenteile zu schwenken.

11. Verfahren zur modularen Ausbildung eines Fahrzeugs, das eine Längsachse (X) aufweist und einen Fahrgastraum (7), einen Tragrahmen (3), im Fahrgastraum befindliche Sitze mit einer Rückenlehne (11a) und einer Sitzfläche (11b), und einen hinteren Stauraum (19), der bezüglich des Fahrzeugfrontbereichs hinter dem Fahrgastraum (7) liegt, umfasst, wobei zur entlang der Längsachse (X) gerichteten Anpassung einer relativen Abmessung im wesentlichen entlang dieser Achse zwischen dem hinteren Stauraum (19) und dem Fahrgastraum (7) ein Trennaufbau (33, 35) zum Trennen zwischen Fahrgastraum (7) und hinterem Stauraum (19) durch longitudinales Gleiten zwischen einer ersten zum Fahrzeugfrontbereich gerichteten Gleitstellung und einer zweiten zum Fahrzeugheckbereich gerichteten Gleitstellung verlagert wird,
**dadurch gekennzeichnet, dass**
- das Fahrzeug **dadurch** abdeckbar ausgebildet wird, dass es mit einem beweglichen Dach (55) versehen wird, das eine erste Stellung einnehmen kann, in welcher es zumindest teilweise den Fahrgastraum (7) überdeckt, sowie eine zweite Stellung, in welcher der Fahrgastraum zumindest teilweise freiliegt, wobei das Dach (55) dann von der Oberseite des Fahrgastraums beabstandet liegt, den es in der ersten Stellung überdeckt hat,
- dieses Fahrzeug mit einer Abdeckung (107) zum Überdecken des hinteren Stauraums (19) ausgestattet wird,
- diese Abdeckung (107) bezüglich des Tragrahmens (3) gelenkig ausgebildet wird, und zwar durch Verschwenken um eine Schwenkachse quer zur Fahrzeuglängsachse (X), die in Richtung des hinteren Bereichs der Abdeckung liegt,
- die relativen Abmessungen zwischen hinterem Stauraum (19) und beweglichem Dach (55) so abgestimmt werden, dass unter Beibehaltung einer verminderten Sitzflächentiefe (11b) in der maximal nach vorne gerichteten Gleitstellung der Rückenlehnen das Dach in dieser zweiten Stellung in dem hinteren Stauraum aufgenommen werden kann,
- das Fahrzeug in einen abgedeckten Zustand gebracht wird, indem die Abdeckung (107) zum Heckbereich des Fahrzeugs gekippt wird und das bewegliche Dach (55) in seiner zweiten Stellung innerhalb des hinteren Stauraums (19) angeordnet wird.

12. Verfahren nach Anspruch 11, **dadurch gekennzeichnet, dass** der Trennaufbau (33, 35) mit einer Verstärkungs- und Sicherheitsarmierung (35) ausgestattet wird, die sich bis über die obere Begrenzung der Rückenlehnen (11a) der Sitze erstreckt und insgesamt quer zur Fahrzeuglängsachse (X) verläuft, sowie mit einer Heckscheibe (15), die auch insgesamt quer zur Fahrzeuglängsachse (X) zum hinteren Längsende des Fahrgastraums (7) hin verläuft, und der longitudinal verfügbare Raum im wesentlichen auf die Stelle des hinteren Stauraums (19) abgestimmt wird, indem die Armierung (35) und die Heckscheibe (15) gleichzeitig mit den Rückenlehnen (11a) der betreffenden Sitze zum Fahrzeugfront- oder Fahrzeugheckbereich hin entlang von Gleitführungen (21) gleitbeweglich verschoben werden, bis wohin die Armierung (35) abfällt, und die an dem Tragrahmen (3) befestigt sind und beiderseits der Sitze liegen.

13. Verfahren nach Anspruch 11, **dadurch gekennzeichnet, dass** zum beabsichtigten Überdecken des Fahrgastraums (7) mit dem beweglichen Dach (55) oder zum Abdecken das bewegliche Dach (55) an den Tragrahmen (3) des Fahrzeugs zwischen seiner ersten und zweiten Stellung im wesentlichen an der Stelle einer hinteren Stellung des Trennaufbaus (33, 35) gelenkig montiert wird, so dass das Dach in den hinteren Stauraum (19) verstaut oder daraus herausgefahren werden kann, unabhängig davon, ob der Trennaufbau (33, 35) in der hinteren Gleitstellung oder in der weiter vorne befindlichen Gleitstellung liegt.
